Europäisches Patentamt

European Patent Office

Office européen des brevets

(11) Veröffentlichungsnummer: **0 002 249**

A1

# EUROPÄISCHE PATENTANMELDUNG

(21) Anmeldenummer: 78101473.3

(22) Anmeldetag: 29.11.78

(51) Int. Cl.²: **H 04 Q 3/54**
H 04 Q 3/42, H 04 M 3/14

(30) Priorität: 07.12.77 DE 2754404

(43) Veröffentlichungstag der Anmeldung:
13.06.79 Patentblatt 79/12

(84) Benannte Vertragsstaaten:
BE FR NL

(71) Anmelder: Telefonbau und Normalzeit GmbH
Mainzer Landstrasse 128-146
D-6000 Frankfurt (Main)(DE)

(72) Erfinder: Delcher, Klaus
Birkholzweg 10a
D-6000 Frankfurt 50(DE)

(72) Erfinder: Seidel, Wolfgang
Ernst-Wiss-Strasse 3
D-6230 Frankfurt 80(DE)

(54) Schaltungsanordnung zur zeitlichen Überwachung von Belegungszuständen in Fernmelde-, insbesondere Fernsprechvermittlungsanlagen.

(57) Die erfindungsgemäße Schaltungsanordnung zur zeitlichen Überwachung von Belegtzuständen besteht im wesentlichen aus einer Speicheranordnung zur Aufnahme von Adressen der zu überwachenden Einrichtungen, des Belegtzustandes und des die Überwachungszeit angebenden Zeitwertes, der schrittweise rückwärts gezählt wird bis zu einem Grenzwert. Beim Erreichen dieses Grenzwertes wird ein Signal abgegeben, das zusammen mit der ebenfalls zur Verfügung stehenden Information über den Belegtzustand und der Adresse der betreffenden Einrichtung zu einer Schaltmaßnahme (Auslösung etc.) in der überwachten Einrichtung führt. Damit ist eine zentrale Überwachung möglich, die unabhängig von anderen Steuerprozeduren erfolgt, und die Größe des Speichers ist nicht direkt abhängig von der Anzahl der zu überwachenden Einrichtungen.

./..

EP 0 002 249 A1

Telefonbau und Normalzeit GmbH, 6000 Frankfurt/Main
Mainzer Landstrasse 128 - 146

Schaltungsanordnung zur zeitlichen Überwachung von Belegungszuständen in Fernmelde-,insbesondere Fernsprechvermittlungsanlagen

---

Die Erfindung betrifft eine Schaltungsanordnung zur Zeitüberwachung in Fernmelde-oder Fernsprechvermittlungsanlagen, und dient dazu, das Problem der Überwachung von Belegungszuständen an zentraler Stelle mit hoher Flexibilität zu lösen.

Bei allen Vermittlungsanlagen gibt es Einrichtungen, die für eine Vielzahl von Verbindungen nacheinander ausgenützt werden können. Entsprechend der Zeit, für die solche Einrichtungen pro Verbindung in Anspruch genommen werden, ist ihre Anzahl in jeder Vermittlungsanlage dimensioniert. So sind z.B. Wählersätze, Übertragungen und Verbindungssätze, die während der gesamten Dauer einer Gesprächsverbindung belegt sind, in größerer Anzahl vorhanden als Einrichtungen, die nur dem Verbindungsaufbau dienen und nur kurzzeitig belegt sind wie z.B. Register, Wahlumsetzer und ähnliche. Diese Einrichtungen können aber durch Fehlverhalten der Teilnehmer oder durch Funktionsstörungen länger oder dauernd belegt werden und sind damit während dieser Zeit für die Funktion der Anlage nicht verfügbar. Sind sehr viele oder alle dieser wichtigen Einrichtungen auf diese Art belegt, dann ist die einwandfreie Funktion der gesamten Vermittlungseinrichtung nicht mehr gegeben. Um diesen Zustand auszuschließen, werden die Belegungszustände solcher Einrichtungen zeitlich überwacht. Die Überwachungszeiten richten sich dabei nach den im praktischen Normalbetrieb üblichen Zeiten plus einem bestimmten Sicherheitszuschlag.

Bekannt ist, die für eine Zeitüberwachung notwendigen Schaltmittel in den zu überwachenden Einrichtungen selbst unterzubringen. Aufwand und Platzbedarf pro Einrichtung führten bald zu zentralen Schaltungsanordnungen mit Speichern. Da zentral angeordnete Speicher hinsichtlich der für die Zeitbestimmung erforderlichen Speicherkapazität leichter auszulegen sind, sind damit genaue Überwachungszeiten möglich. Es sind Lösungen bekannt mit einer direkten Zuordnung von Speichermitteln entweder zu den zu überwachenden Einrichtungen oder mit einer Zuordnung von Speichern zu Verbindungen, die überwacht werden sollen. In beiden Fällen ist die für die Zeitgenauigkeit erforderliche Anzahl von Speicherelementen zu multiplizieren mit der Zahl der gleichzeitig zu überwachenden Einrichtungen, um den Gesamtbedarf an Speicherelementen zu erhalten. Die Speicherkapazität solcher Speicher muß vergrößert werden, wenn die Anzahl der zu überwachenden Einrichtungen oder Verbindungen sich vergrößert. Eine Änderung in der Vermittlungsanlage hat also eine Änderung der Überwachungseinrichtung zur Folge, wenn die Speicher eine direkte Zuordnung zu der zu überwachenden Verbindung oder Einrichtung haben.

In der DT-AS 12 19 095 ist z.B. eine Speichereinrichtung zur Überwachung von Registern beschrieben, bei der jedem Register eine Speicherzeile fest zugeordnet ist. Die Zuordnung von Speicherelementen zu einer Verbindung ist die in der Patentschrift 15 37 906 (Spalte 5 und 6) erwähnt. Hierbei dienen die zur Zeitüberwachung benutzten Speicherelemente (Magnetkerne) dazu, die in einer Verbindung auftretende vorübergehende Schaltmaßnahme zu kontrollieren.

In beiden Fällen sind die Speicheranordnungen für die Überwachung des Belegungszustandes von Einrichtungen in einer direkten Abhängigkeit von der Anzahl dieser Einrichtungen. Diese Speicheranordnungen müßten also erweitert werden, wenn die Anzahl der Register oder Verbindungen größer wird.

Allen Überwachungseinrichtungen liegt die Aufgabe zu Grunde, nach dem Ablauf einer vorgegebenen Zeit ein Signal zu erzeugen, womit eine Schaltmaßnahme eingeleitet werden kann. Da die Überwachungszeiten sehr unterschiedlich sein können, müßte man bei einer direkten Zuordnung mehrere Zeitspeicher für die unterschiedlichen Zeiten anordnen. Eine andere Möglichkeit besteht darin, verschiedene Zähltakte anzubieten oder den Taktgeber zu beeinflussen. Diese Maßnahmen erfordern einen erhöhten Speicher-und Steueraufwand und sind bei Änderungen relativ unflexibel.

Es ist Aufgabe der Erfindung, eine Schaltungsanordnung zur Zeitüberwachung vorzustellen, die unabhängig von der Größe der Vermittlungsanlage, also unabhängig von der Anzahl der Einrichtungen, deren Belegungszustand überwacht werden soll, ist. Außerdem ist die erfindungsgemäße Anordnung flexibel und sehr genau bezüglich der Überwachungszeiten und erlaubt es, alle Arten der in einer Vermittlungsanlage vorkommenden Überwachungsmöglichkeiten zu behandeln.

Dies wird dadurch erreicht, daß die Adresse (ADR) der betreffenden Einrichtung, der Belegungszustand (BZ) und ein für diesen Belegungszustand maßgeblichen Zeitwert (ZW) in eine freie Zeile eines einer zentralen Steuereinrichtung funktionell zugeordneten Speichers parallel eingeschrieben werden. Danach wird der eingegebene Zeitwert für die Dauer des zu überwachenden Belegungszustandes taktweise geändert bis zum Erreichen eines vorgegebenen Grenzwertes. Wenn dieser Grenzwert erreicht ist, erfolgt eine Meldung an die zentrale Steuereinrichtung verbunden mit der Ausspeicherung der Adresse und des Belegungszustandes. Mit der Übernahme dieser ausgespeicherten Information ist die zentrale Steuerung in der Lage, eine Änderung des Belegungszustandes in der überwachten Einrichtung zu bewirken.

Während der Überwachungszeit, d.h. in dem Zeitraum vom Einschreiben in die Speicherzelle bis zum Erreichen des Grenzwertes wird nur der sich schrittweise ändernde Zeitwert ausgelesen. Nur, wenn der Grenzwert erreicht ist, wird der gesamte Informationsinhalt einer Zeile ausgespeichert. Damit arbeitet die erfindungsgemäße Schaltungsanordnung während der Überwachungszeit völlig unabhängig von anderen Steuereinrichtungen. Beim zyklischen Ansteuern der Zeilen nacheinander wird der Zeitwert bei jedem Umlaufzyklus des Speichers in an sich bekannter Weise um den Wert "-1" geändert. Beim Erreichen des Grenzwertes "+1" wird damit ein Signal an die zentrale Steuereinrichtung gegeben.

Ein weiterer Speicherplatz zur Aufnahme einer Zusatzinformation (U) ist vorhanden, womit eine die Umlaufzyklen zählende Anordnung vorgeschaltet wird, die bewirkt, daß der den jeweiligen Zeitwert ändernde Zähltakt nicht mehr bei jedem Zyklus auftritt. Die gesamte Überwachungszeit wird damit verlängert auf den n-fachen Wert, weil der Zähltakt nur noch bei jedem n-ten Umlaufzyklus wirksam werden kann. Für die Einspeicherung des Zeitwertes ist eine Anzahl von m-Speicherbits vorgesehen. Damit können alle Zeitwerte zwischen dem einfachen Umlaufzyklus und dem $2^m$-fachen Wert eingespeichert werden. Da für die Endstellung und die Nullstellung zwei Kombinationen entfallen, ergibt sich eine Gesamtüberwachungszeit von $(2^m-2)$x t. Dabei entspricht t dem Zeitraum zwischen zwei Zähltaktschritten womit gleichzeitig die Genauigkeit der gesamten Überwachungszeit gegeben ist. Auch wenn die Zusatzinformation gesetzt ist, bleibt die relative Genauigkeit erhalten. Dadurch, daß jedem Zeitwert ein anderes Bitmuster innerhalb des Zeitwertspeicherbereiches entspricht, lassen sich auch unterschiedliche Zeiten für die gleiche periphere Einheit mit verschiedenen Belegungszuständen einschreiben. Das kommt z.B. vor, wenn eine periphere Einheit bezüglich eines vorübergehenden Belegungszustandes überwacht werden soll und außerdem die gesamte Belegungsdauer zu kontrollieren ist.

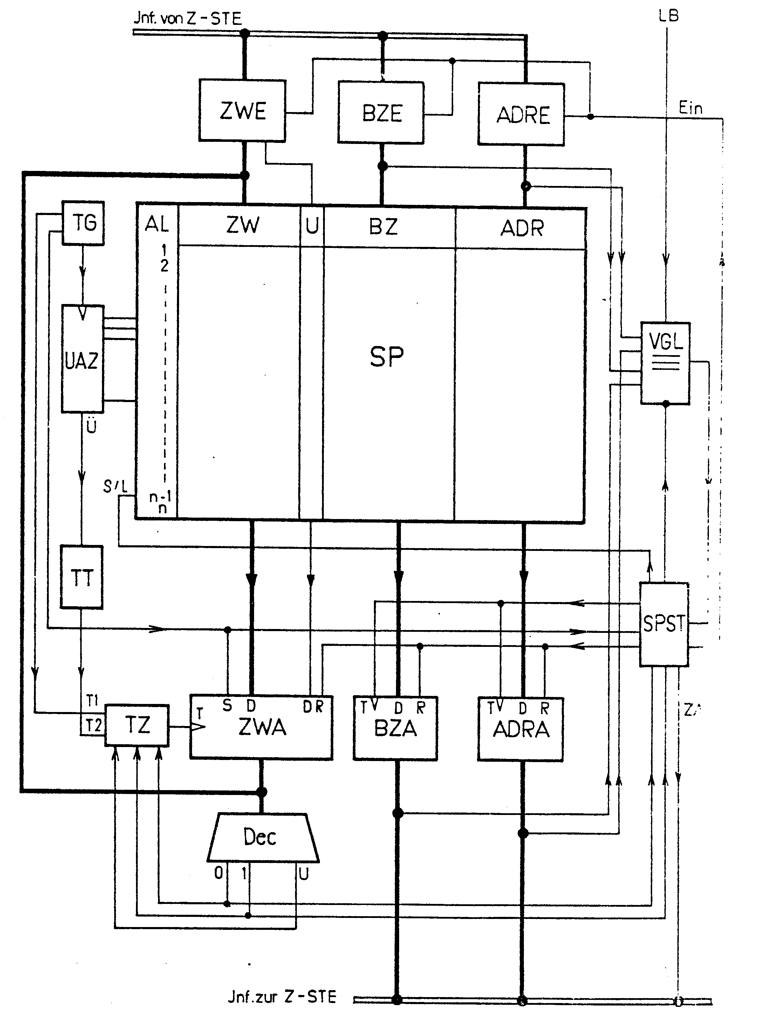

Anhand des in der Zeichnung dargestellten Ausführungsbeispiels wird die Schaltungsanordnung und deren Funktion im folgenden erläutert.

Der in diesem Ausführungsbeispiel angewendete Speicher SP hat in jeder Zeile elf Bits für die Einspeicherung des Zeitwertes in einem Zeitwertregister (ZW), ein Bit für die Zeitverlängerung in einem Zusatzinformationsregister (U), vier Bits für den Belegungszustand in einem Belegungszustandsregister (BZ)
und acht Bits für die Adresse in einem Adressregister (ADR). Über die im Speicher selbst enthaltene Ansteuerlogik AL wird jede Speicherzeile
adressiert. Für die Adressierung ist ein Umlaufadressenzähler UAZ eingesetzt, der die Adresse
einer jeden Zeile zyklisch nacheinander anlegt.
Der Umlaufadressenzähler wird von einem Taktgeber
TG angetrieben. Die Anzahl der Speicherzeilen und
damit die Anzahl der aus dem Umlaufadressenzähler
kommenden Ansteuerbits richtet sich nach den in
einer Fernsprechvermittlungsanlage zu erwartenden
Anzahlen von peripheren Einrichtungen oder Belegungszuständen. Die Größe des Speichers kann also
an die Größe der Vermittlungsanlage angepaßt werden
und braucht danach nicht mehr geändert zu werden.
Auch die Breite einer jeden Speicherzeile kann an
die Bedürfnisse der jeweiligen Art der Vermittlungsanlage angepaßt werden.

Die Eingaberegister ZWE für die Zeitwerte, BZE für
die Belegungszustände und ADRE für die Adressen
nehmen zunächst die von der zentralen Steuereinrichtung Z-STE kommende Information parallel auf. Die
Speichersteuerung SPST sucht daraufhin eine freie
Zeile. Diese freie Zeile wird aus der Decodierung
Dec durch das Erscheinen der Information 0 gekennzeichnet. Nun wird durch den Einschreibbefehl der
Speichersteuerung die gesamte Information aus den
Eingaberegistern in die Speicherzeile gebracht. Die
Ausgaberegister ZWA für die Zeitwerte, BZA für die
Belegungszustände und ADRA für die Adressen dienen
zur Aufnahme der aus dem Speicher SP ausgelesenen
Information. Dabei wird während der Zeitdauer der

Überwachung eines Belegungszustandes nur die Information des Zeitwertes in das Ausgaberegister ZWA eingelesen. Das Ausgaberegister ZWA ist über den Takteingang schrittweise änderbar. Der Ablauf einer Überwachungszeit wird nachfolgend noch im einzelnen beschrieben.

Wenn eine Zeile gelöscht werden soll, weil in der zentralen Steuereinrichtung Z-STE erkannt ist, daß ein Belegungszustand sich verändert hat und nicht mehr überwacht werden muß, dann wird die gesamte Information von der zentralen Steuereinrichtung in die Eingaberegister gestellt. Mit dem Löschbefehl LB wird die Vergleichseinrichtung VGL aktiv geschaltet. Nunmehr wird die in den Eingaberegistern stehende Information verglichen mit der Information, die zyklisch in die Ausgaberegister eingelesen wird. Wenn die zu löschende Zeile gefunden wurde, kommt aus der Speichersteuerung (SPST) ein Rückstellbefehl an das Ausgaberegister. Der Einschreibbefehl für die Übernahme der in den Eingaberegistern stehenden Information in den Speicher wird nicht gegeben. Damit ist die betreffende Speicherzeile gelöscht.

Für die Steuerung der Zeitwertspalten sind weitere Schaltanordnungen vorgesehen: Der Taktzuteiler TZ ist eine Anordnung, die die vom Taktgeber TG oder die vom Taktteiler TT kommenden Takte jeweils an das Ausgaberegister ZWA anlegt. Im Taktzuteiler wird entsprechend der aus der Decodierung Dec kommenden Information normalerweise der Takt T1 angelegt. Das ist dann der Fall, wenn weder 0 oder 1 noch U ausgelesen wird. Der Takt T2 wird angelegt, wenn aus der Decodierung das Signal U erscheint. Die Signale 0 oder 1 verhindern im Taktteiler, daß überhaupt ein Takt T1 oder T2 zum Ausgaberegister gelangen kann. Wenn der Takt T1 zum Ausgaberegister ZWA durchgreift, wird das Ausgaberegister bei jedem Umlaufzyklus um einen Binärwert zurückgestellt, oder rückwärts gezählt. Wenn die Zusatzinformation (U) gesetzt ist, können Änderungen des Ausgaberegisters ZWA nur dann vorgenommen werden, wenn der aus dem Taktteiler TT kommende Takt T2 vorliegt. Der Taktteiler TT zählt die Umlaufzyklen mit dem Signal Ü. Dadurch wird der Änderungszeitraum verlängert. Im Beispiel sei angenommen, daß ein einfacher Umlaufzyklus 2,5 ms beträgt. Wenn der Taktteiler eingeschaltet ist, so wird z.B. diese Zeit auf das 16-fache verlängert, so daß sich ein Änderungszyklus von z.B. 40 ms ergibt.

Da der Zeitwertspeicher insgesamt 11 Bits enthält lassen sich $2^{11}$ = 2048 verschiedene Kombinationen einstellen. Die Einstellungen 0 und 1 entfallen für die Auswertungen, weil diese benutzt werden für die Kennzeichnung einer leeren Zeile (0) oder für die Kennzeichnung, daß der Grenzwert erreicht ist (1). Es ergeben sich demnach 2048 - 2 = 2046 auswertbare Zeitschritte. Multipliziert man die Zahl der auswertbaren Zeitwertschritte (2046) mit dem Taktintervall von z.B. 2,5 ms so erhält man eine Zeit von 5,115 Sekunden als maximal einspeicherbare Überwachungszeit. Wird jedoch durch die Zusatzinformation (U) der Taktteiler TT mit einbezogen in die Taktsteuerung zur Änderung des Ausgaberegisters ZWA, so ergibt sich eine Zeit von z.B. 2046 x 40 ms = 81,84 Sekunden. Selbstverständlich ist es möglich, durch Erhöhung der Zahl der Zusatzinformationen (U) die zur Überwachung von Belegungszuständen erforderliche Zeit noch besser zu variieren oder zu verlängern.

Mit im praktischen Betrieb auftretenden Beispielen soll nunmehr erläutert werden, wie die gesamte Einrichtung im Zusammenhang funktioniert.

Angenommen sei, daß der Teilnehmer der seinen Hörer abgenommen hat, nicht sofort einen Wählton erhalten kann, weil möglicherweise gerade kein freies Register zur Wahlaufnahme zur Verfügung steht. In einem solchen Fall wird von der zentralen Steuerung die Adresse dieses Teilnehmers, z.B. 17, zusammen mit dem Belegungszustand, z.B. 4, einem vorgegebenen Zeitwert ZW in den Speicher der Überwachungseinrichtung eingetragen. Der für diesen Belegungszustand maßgebliche Zeitwert ZW könnte z.B. 3 Sekunden betragen. In diesem Falle wäre in die Spalten des Zeitwertspeicherbereiches der Betrag von 1201 in binär verschlüsselter Form einzutragen, weil der fehlende Zeitschritt von 1 nach 0 zum eigentlichen Wert (1200 = 3000ms : 2,5ms) dazu addiert werden muß. Wenn dies geschehen ist, wird nach einem Umlaufzyklus, d.h. nach 2,5 ms, der im Zeitwertspeicher enthaltene Betrag in das Ausgaberegister ZWA ausgelesen. Der vom Taktgeber TG über den Taktteiler gelangende Takt T1 stellt das änderbare Ausgaberegister um den Betrag 1 zurück. Damit gelangt beim Wiedereinlesen der Speicherzeile der Zeitwert von 1200 in den Speicher zurück. Nach weiteren 2,5 ms wird wiederum aus der gleichen Zeile dieser Zeitwert ausgelesen und um den Betrag 1 vermindert. Dieses Spiel wiederholt sich solange, bis aus dem Zeitwertspeicher der Wert 1 ausgelesen wird. Mit dem aus der Decodierung Dec kommenden Signal 1 wird im Taktzuteiler TT das Ändern des Ausgaberegisters verhindert. Außerdem wird mit dem gleichen Signal die Speichersteuerung angereizt. Damit wird auch die in der gleichen Speicherzeile enthaltene Information über den Belegungszustand BZ4 und die Adresse des Teilnehmers 17 in die Ausgaberegister BZA und ADRA eingelesen.

Außerdem wird zu diesem Zeitpunkt von der Speichersteuerung SPST ein Signal ZA erzeugt, womit die zentrale Steuerung angereizt wird. Die Information über den Belegungszustand und die Adresse des beteiligten Teilnehmers, im Beispiel 17, wird nunmehr der zentralen Steuerung übergeben. Damit ist die zentrale Steuerung in der Lage, erneut einen Versuch zu machen, diesem Teilnehmer ein Register zur Verfügung zu stellen. Die Anwendung der Überwachungseinrichtung für diesen Vorgang hat den Vorteil, daß die zentralen Steuereinrichtung nicht während der Überwachungszeit belegt sein muß. In dieser Zeit steht die zentrale Steuereinrichtung für andere Steuervorgänge zur Verfügung und wird erst dann wieder aktiv, wenn die Überwachungseinrichtung mit dem Signal ZA die Steuerung erneut anfordert.

Wenn nun der Teilnehmer zu einem Register durchgeschaltet worden ist und den Wähltion hört, zum Zeichen dafür, daß er nun seine Wahlinformation absetzen kann, so ist dieser Verbindungszustand oder auch der Belegungszustand des Registers zu überwachen. Denn es könnte der Fall eintreten, daß es sich um eine Belegung infolge einer Leitungsströrung handelt und somit das Register-weil ein Teilnehmer dann nicht wählen kann- dauernd belegt wäre. In diesem Fall ist jedoch das Zeitraster für die Überwachung dieses Belegungszustandes mit 2,5 ms zu fein, und auch die Überwachungszeit, die erreichbar ist, zu kurz. Deshalb wird bei diesem Belegungszustand die Zusatzinformation (U) gesetzt. Als Überwachungszeit sei angenommen, daß der Belegungszustand eines Registers mit 12 Sekunden überwacht werden soll. Für diesen Fall ist also der Zeitwert 301 einzutragen. Dieser Zeitwert ergibt sich, wenn man die erforderliche Zeit von 12 000 ms durch das Änderungszeitintervall von 40 ms teilt. Einen Zeitschritt muß man hinzugeben, weil der Zeitwert 0 nie erreicht werden kann. In den Speicher wird also eingeschrieben zunächst der Zeitwert mit 301, die Zusatzinformation (U), der Belegungszustand z.B. 5 und die Adresse des Teilnehmers 17. Damit hat der Speicher alle Informationen, um in der Lage zu sein, die Überwachung dieses Belegungszustandes durchzuführen. Wie schon vorher beschrieben läuft innerhalb der Überwachungszeit das Auslesen und Wiedereinspeichern des Zeitwertes solange zyklisch durch, bis der absolute Grenzwert 1 im Ausgaberegister ZWA erscheint. Da die Zusatzinformation (U) gesetzt worden ist, wird nunmehr alle 40 ms eine Rückzählung des Ausgaberegisters durchgeführt. Es ergeben sich also 300 Zeitschritte (von 301 bis 1) multipliziert mit 40 ms = 12 000 ms = 12 Sekunden. Nach dieser Zeit wird wie vorher beschrieben beim Erreichen der Stellung 1 im Zeitwertspeicher von der Speicher-Steuerung ein Signal erzeugt, das eine Anforderung an die zentrale Steuerung darstellt. Die zentrale Steuerung übernimmt daraufhin die Daten aus dem Belegungszustands-Ausgaberegister BZA und die Adresse des beteiligten Teilnehmeranschlusses auf Sammelleitungen, die zur zentralen Steuerung führen. Wenn also die Vorgabezeit von 12 Sekunden in voller Länge abgelaufen ist, so ist dies ein Zeichen dafür, daß der Teilnehmer in dieser Zeit nicht gewählt hat. In diesem Fall muß das Register wieder freigeschaltet werden, damit es für andere Verbindungen zur Verfügung stehen kann. Die zentrale Steuereinrichtung bearbeitet diesen Vorgang auf Grund der von der Überwachungseinrichtung angebotenen Daten und gibt einen Löschbefehl in die Überwachungseinrichtung, so daß die vorher für diesen Belegungszustand belegte Speicherzeile frei wird.

- 12 -

0002249

Sollte aber der Teilnehmer innerhalb dieser Vorgabezeit von 12 Sekunden eine Wahlhandlung durchgeführt haben, so wird dies zunächst über das Register in nicht dargestellter Weise der Steuerung gemeldet. In diesem Fall gibt die Steuerung einen Löschbefehl ab. Damit wird die für die Überwachung des Belegungszustandes benutzte Zeile zunächst gelöscht. Weiterhin wird ein Einschreibbefehl gegeben, der erneut eine Speicherzeile belegt. Das kann die selbe Zeile sein, die vorher belegt war. Es ist aber nicht notwendig, die selbe Zeile wieder zu belegen, weil die Speicherzeilen nicht gebunden sind an eine Adresse oder an einen Belegungszustand. Mit der erneuten Belegung einer Zeile wobei der Zeitwert wiederum z.B. auf 301 gestellt wurde, die Zusatzinformation (U) eingespeichert wurde und der Belegungszustand sowie die Adresse eingeschrieben wurde, beginnt die Überwachungszeit neu. Es ist nun denkbar, daß man den Belegungszustand eines Registers mit einer kürzeren Zeit überwacht, wenn der Teilnehmer bereits Ziffern gewählt hat. In diesem Fall wird beim Einschreiben der Speicherzeile die Adresse des gleichen Registers der gleiche Belegungszustand oder je nachdem, wie die Steuerung geartet ist, auch ein anderer Belegungszustand, die Zusatzinformation (U) und ein neuer Zeitwert eingeschrieben. Dieser Zeitwert beträgt z.B. 201, wenn 8 Sekunden als Überwachungszeit für den betreffenden Belegungszustand gültig sein sollen. Die Steuerungsvorgänge luafen in der gleichen Weise ab, wie bereits beschrieben. Die Behandlung eines solchen Vorgangs ist unabhängig von dem im Zeitwertspeicher eingeschriebenen Zeitwert. Die Prozeduren sind also immer die gleichen, so daß diese Schaltungsanordnung zur Zeitüberwachung von Belegungszuständen universell einsetzbar ist.

0002249

Ein weiteres Anwendungsbeispiel der Erfindung ergibt sich, wenn eine Übertragung nach der Auslösung gegen erneute Belegung für eine bestimmte Zeit gesperrt werden soll. Dies wird z.B. dann erforderlich, wenn der Teilnehmer der eigenen Anlage bereits die Verbindung ausgelöst hat, aber nicht sichergestellt ist, ob sein externer Gesprächspartner am anderen Ende der Leitung ebenfalls bereits von der Verbindung abgetrennt worden ist. Würde man eine solchermaßen ausgelöste Verbindung sofort wieder belegungsfähig schalten, so könnte es passieren, daß der Teilnehmer, der auf diese Leitung kommt, mit dem noch von der vorigen Verbindung vorhandenen Gesprächspartner falsch verbunden würde. Um die Wahrscheinlichkeit, daß es zu solchen Verbindungen kommt, möglichst gering zu halten, werden spezielle Belegungszustände aufrecht erhalten, die dann zeitlich zu überwachen sind. Die betreffende Übertragung wird dann erst nach Ablauf der Überwachungszeit freigegeben. Die Steuerung eines solchen Vorganges kann ohne weiteres von der Schaltungsanordnung zur zeitlichen Überwachung von Belegungszuständen übernommen werden. Der Inhalt der Speicherzeile würde für diesen Zweck wie folgt aussehen: Der Zeitwert ergibt sich für z.B. aus 10 S oder 10 000 ms : 40 ms = 250. 250 + 1 = 251 (weil der Schritt 0 nicht erreichbar ist). Die Zusatzinformation in der Spalte U wird gesetzt. Der Belegungszustand wird mit z.B. 7 eingetragen. Außerdem ist die Adresse der belegten Amtsübertragung z.B. 08 einzutragen. Diese Informationen genügen, um mit Hilfe der Speichersteuerung und der Zeitauswertung der zentralen Steuerung nach Ablauf der Überwachungszeit mitzuteilen, daß die betreffende Übertragung freigegeben werden kann.

Wie man sieht, ist diese Schaltungsanordnung in einem weiten Bereich innerhalb einer Fernmeldevermittlungsanlage anwendbar. Sie arbeitet unabhängig von der jeweils für die Vermittlungsaufgaben eingesetzten zentralen Steuerung und hat durch die Eingangs-und Ausgangsschnittstelle auch die Möglichkeit mit anderen Steuerungen zusammen zuarbeiten. Es ist selbstverständlich, daß sich durch Erweiterungen des Speicherbereichs, etwa durch Vergrößerung der Anzahl der Speicherelemente innerhalb einer Zeile, der Anwendungsbereich der vorliegenden Schaltungsanordnung in weiten Grenzen erweitern läßt.

P 3412
Gö/sch
8.11.1978

Schaltungsanordnung zur zeitlichen Überwachung von
Belegungszuständen in Fernmelde-,insbesondere Fernsprechvermittlungsanlagen

---

P a t e n t a n s p r ü c h e

1. Schaltungsanordnung zur zeitlichen Überwachung
von Belegungszuständen in zur Herstellung und
Durchführung von Nachrichtenverbindungen notwendigen Einrichtungen mit einem unterschiedliche,
sich schrittweise ändernde Zeitwerte aufnehmenden
Speicher, sowie einer diese Zeitwerte überwachende Anordnung, durch die beim Erreichen bestimmter Zeitwerte Schaltmaßnahmen in den hinsichtlich der Dauer ihres Belegungszustandes zu überwachenden Einrichtungen ausgelöst werden,
dadurch gekennzeichnet,
daß die Adresse (ADR) der betreffenden Einrichtung, der Belegungszustand (BZ) und ein für
diesen Belegungszustand maßgeblicher Zeitwert
(ZW) in eine freie Zeile eines einer zentralen
Steuereinrichtung funktionell zugeordneten Speichers (SP) parallel eingeschrieben
werden, daß der eingegebene Zeitwert für die Dauer
des zu überwachenden Belegungszustandes taktweise
geändert wird, und beim Erreichen eines vorgegebenen Grenzwertes durch Ausspeicherung der Adresse
und des Belegungszustands-Kennzeichens eine Änderung des Belegungszustandes in der überwachten
Einrichtung bewirkt wird.

2. Schaltungsanordnung nach Anspruch 1,
   dadurch gekennzeichnet,
   daß die Speicherzeilen nacheinander zyklisch umlaufend angesteuert werden und während der Überwachungszeit, d.h. in dem Zeitraum von Einschreiben in die Speicherzeile bis zum Erreichen des Grenzwertes, nur der sich schrittweise ändernde Zeitwert ausgelesen wird, aber beim Erreichen des Grenzwertes der gesamte Inhalt einer Zeile ausgespeichert wird.

3. Schaltungsanordnung nach Anspruch 1,
   dadurch gekennzeichnet,
   daß der Zeitwert bei jedem Umlaufzyklus des Speichers in an sich bekannter Weise um den Wert "-1" geändert wird, solange bis der Grenzwert "+1" erreicht ist, und dadurch ein Signal an die zentrale Steuereinrichtung gegeben wird.

4. Schaltungsanordnung nach Anspruch 3,
   dadurch gekennzeichnet,
   daß in der Speicherzeile ein Speicherplatz zur Aufnahme einer Zusatzinformation (U) vorhanden ist, womit eine die Umlaufzyklen zählende Anordnung vorgeschaltet wird, die bewirkt, daß der den jeweiligen Zeitwert ändernde Zähltakt nur bei jedem n-ten Zyklus auftritt, und damit die Überwachungszeit entsprechend verlängert wird.

5. Schaltungsanordnung nach den Ansprüchen 3 und 4,
   dadurch gekennzeichnet,
   daß die Änderung des ausgelesenen Zeitwertes verhindert wird, wenn die Zeile frei ist, oder der Grenzwert erreicht ist, indem beim Vorhandensein des Zeitwertes 0 oder 1 der Zähltakt abgeschaltet wird.

P 3412
Gö/sch
8.11.1978

**Europäisches Patentamt**

# EUROPÄISCHER RECHERCHENBERICHT

Nummer der Anmeldung

EP 78 10 1473

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 201 329 (STANDARD ELEKTRIK)<br><br>* Seite 1, Zeile 3 bis Seite 2, Zeile 3; Seite 3, Zeilen 1-7; Seite 3, Zeilen 22-30; Seite 6, Zeilen 4-15 *<br><br>-- | 1-5 |
| | US - A - 3 821 718 (PADGETT)<br>* Spalte 9, Zeile 41 bis Spalte 10, Zeile 35 *<br><br>-- | 1,4 |
| | US - A - 3 881 156 (DEUTSCH)<br>* Spalte 1, Zeile 37 bis Spalte 2, Zeile 4; Spalte 18, Zeile 60 bis Spalte 19, Zeile 42 *<br><br>-- | 1 |
| | FR - A - 2 073 182 (SIEMENS)<br>* Seite 5, Zeile 18 bis Seite 7, Zeile 8 *<br><br>---- | 1 |

### KLASSIFIKATION DER ANMELDUNG (Int.Cl.²)

H 04 Q 3/54
          3/42
H 04 M 3/14

### RECHERCHIERTE SACHGEBIETE (Int. Cl.²)

H 04 M 3/14
H 04 Q

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-03-1979 | VANDEVENNE |

EPA form 1503.1  06.78